# EUROPEAN PATENT APPLICATION

(11) **EP 3 686 828 A1**
(43) Date of publication of application: **29.07.2020**
(21) Application number: 18859761.1
(22) Date of filing: 13.09.2018
(51) Int. Cl.: G06Q 20/34, G06Q 20/40

(54) **MULTI-CARD AND PAYMENT METHOD USING SAME**

(30) Priority: 22.09.2017 KR 20170122611
(71) Applicant: Kona I Co., Ltd., Seoul 17237 (KR)
(72) Inventor: CHO, Chung Il, Seoul 07237 (KR); SIM, Dae Beom, Seoul 07237 (KR); SONG, Bo Geun, Seoul 07237 (KR)
(74) Representative: Vossius & Partner Patentanwälte Rechtsanwälte mbB
(86) International application number: PCT/KR2018/010774
(87) International publication number: WO 2019/059582

(57) **Abstract**

The present invention relates to a multi-card and a payment method using the same, the multi-card comprising: a secure element for storing at least one payment card information in an applet form; an input unit including a plurality of buttons respectively matched with the card information; and a control unit for receiving, from a user terminal, and storing at least one membership card information and matching information with the input unit, wherein the secure element generates transaction response information including one membership card information and one payment card information activated according to a selection of the input unit.

## Description

### TECHNICAL FIELD

The present invention relates to a multi-card and a payment method using the same, and specifically, to a multi-card and a payment method using the same, which can simultaneously perform payment and membership service using one or more card information and membership information set in the multi-card.

### BACKGROUND ART

Although mobile payment using a mobile terminal is distributed in the payment market recently, since most of people still think that physical plastic cards are convenient and terminals in the stores also support physical card payment, the efficiency and convenience of the physical card in the actual payment market cannot be ignored.

However, since existing cards are issued in the form of a separate plastic card for each type of an issued card, it is inconvenient to carry a plurality of cards together in a wallet. For example, a user has inconvenience of carrying a plurality of cards together, such as membership cards, prepaid cards, coupon cards or the like, in addition to credit cards or check cards, in a wallet to receive other services.

As the existing method of providing cards produces a separate plastic card for each service, there is a problem in that it is inconvenient from the user's point of view since the number of cards to possess increases, and considerable expenses or costs are consumed from the card issuer's point of view due to issuance and delivery of plastic cards.

As a part of developing a technique for solving the problems, 'Multi-Smart Card' of Korean Patent No. 10-1613855 proposes a technique capable of selecting and using a card desired to be used by handling a touch screen provided on a plate. However, such a multi-smart card has inconvenience of selecting a desired card by handling the card every time it is used, and there is a problem in that the card cannot be used when the touch screen does not operate.

### DISCLOSURE OF INVENTION

### TECHNICAL PROBLEM

Therefore, it is an object of the present invention to provide a multi-card and a method, which can simultaneously perform payment and membership service, while solving the inconvenience of possessing a plurality of cards.

### TECHNICAL SOLUTION

To accomplish the above object, according to one aspect of the present invention, there is provided a multi-card comprising: a secure element for storing at least one payment card information in an applet form; an input unit including a plurality of buttons respectively matched with the card information; and a control unit for receiving and storing matching information between at least one membership card information and the input unit from a user terminal, wherein the secure element generates transaction response information including one membership card information and one payment card information activated according to selection of the input unit.

As an embodiment, the multi-card further may comprise a display unit for outputting at least one information among the one membership card information and the one payment card information activated according to selection of the input unit. The matching information may be information generated through a service application running in the user terminal and matching the at least one membership card information and the plurality of buttons respectively according to user's setting. In addition, the secure element may transmit the activated one payment card information and the activated one membership card information to a payment terminal in one transaction response information.

According to another aspect of the present invention, there is provided a payment method using a multi-card, the method comprising the steps of: storing at least one payment card information in a secure element of the multi-card; receiving matching information between at least one membership card information and an input unit from a user terminal, and storing the matching information in a control unit; activating, when a payment is made, one payment card information and one membership card information according to a selection signal generated by the input unit; and generating transaction response information including the activated one payment card information and the activated one membership card information, and transmitting the transaction response information to the payment terminal, by the secure element.

### ADVANTAGEOUS EFFECTS

According to the present invention, there is an advantage of simultaneously processing payment and point accumulation using a multi-card of a user, without changing an existing payment system. In addition, the multi-card of the present invention has an advantage of simultaneously processing payment and membership service with one card by storing one or more payment card information and membership card information, and storing each card information to be matched with an input unit.

According to the payment method of the present invention, as the credit card information and the membership card information are included in transaction response information and transmitted to a payment terminal, there is an effect of simultaneously performing payment and membership service by reading an IC card only once, without an additional action for processing the membership service.

Furthermore, conventionally, there is a disadvantage of presenting a separate membership card or outputting and presenting a bar code, a QR code or the like in order to receive membership service after making a payment. However, the present invention solves the problem and has an advantage of omitting the step of outputting and recognizing membership card information and maximizing convenience of a user.

### BRIEF DESCRIPTION OF THE DRAWINGS

FIG. 1 relates to a payment system using a multi-card according to an embodiment of the present invention.
FIG. 2 shows components of a multi-card according to an embodiment of the present invention.
FIG. 3 is a sequence diagram illustrating a method of issuing membership card information of a multi-card according to an embodiment of the present invention.
FIG. 4 is a sequence diagram illustrating a payment method using a multi-card according to an embodiment of the present invention.

In a plurality of drawings, like reference numerals denote like components.

### MODE FOR CARRYING OUT THE INVENTION

Specific structural or functional descriptions on the embodiments according to the concept of the present invention disclosed in this specification are provided as an example only to describe the embodiments according to the concept of the present invention, and the embodiments according to the concept of the present invention may be embodied in a variety of forms and are not limited to the embodiments described in this specification.

Since the embodiments according to the concept of the present invention may make diverse changes and have various forms, the embodiments will be illustrated in the drawings and described in this specification in detail. However, this is not to limit the embodiments according to the concept of the present invention to specific disclosed forms and includes all changes, equivalents or substitutions included in the spirit and scope of the present invention.

Although the terms first, second, and the like may be used to describe various elements, the elements should not be limited by these terms. These terms are only used to distinguish one element from another. For example, a first element could be termed as a second element, and similarly, a second element could be termed as a first element, without departing from the scope according to the concept of the present invention.

It will be understood that when an element is referred to as being "connected" or "coupled" to another element, it may be directly connected or coupled to another element, or intervening elements may exist. In contrast, it will be understood that when an element is referred to as being "directly connected" or "directly coupled" to another element, there are no intervening elements. Other expressions describing the relations between the elements, i.e., "between" and "immediately between" or "neighboring" and "immediately neighboring", should be interpreted in the same manner.

The terms used in the specification are used to describe only specific embodiments and are not intended to limit the present invention. Singular forms are intended to include plural forms unless the context clearly indicates otherwise. It will be further understood that the terms "include", "have" and the like used in this specification specify the presence of features, numerals, steps, operations, elements, parts, or a combination thereof stated in this specification, but do not preclude in advance the possibility of presence or addition of one or more other features, numerals, steps, operations, components, parts, or a combination thereof.

Unless otherwise defined, all terms used herein, including technical or scientific terms, have the same meanings as those generally understood by those with ordinary knowledge in the field of art to which the present invention belongs. Such terms as those defined in a generally used dictionary are to be interpreted to have the meanings equal to the contextual meanings in the relevant field of art, and are not to be interpreted to have ideal or excessively formal meanings unless clearly defined in this specification.

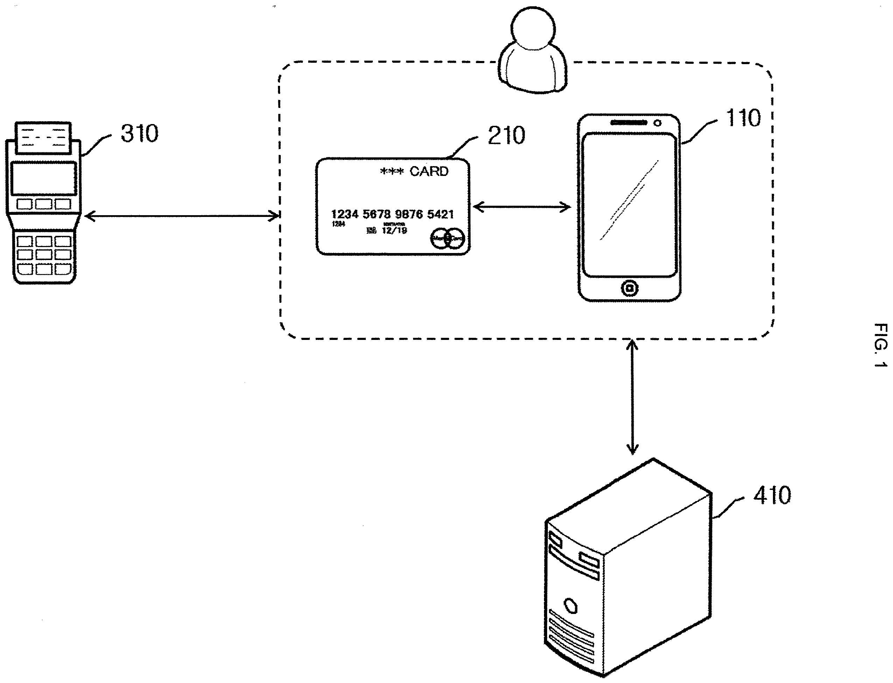

FIG. 1 relates to a payment system using a multi-card according to an embodiment of the present invention. Referring to FIG. 1, a payment system of the present invention includes a user terminal 110, a multi-card 210, a payment terminal 310, and a service server 410.

The user terminal 110 is a smart device possessed by a user, and the user terminal 110 may include a cellular phone, a smart phone, a smart pad, a notebook computer, a digital broadcasting terminal, a Personal Digital Assistant (PDA), a Portable Multimedia Player (PMP), a navigator, a tablet PC, and various wearable devices such as a smart watch, a smart band and the like. However, it is not limited thereto and may be a device of various forms provided with a communication function capable of wireless communication and a separate application capable of performing a payment service.

The user terminals 110 may install and drive service applications provided by the service server 410. The user terminals 110 may download the service applications from application markets (e.g., App Stores or Google Play markets). As an embodiment, a security application for making payment can be installed together. The user terminals 110 may wirelessly connect to the multi-card 210 using the service application, and may set card information stored in the multi-card 210 to match the buttons of an input unit, respectively.

The multi-card 210 is a plate-shaped physical card and may include an IC chip to store information on a plurality of payment means. As an embodiment, the multi-card 210 may store card information needed for the payment means issued by various card companies and various membership card information in the IC chip. At this point, the card information may be stored in a Card OS (COS) or in an applet form.

As an embodiment, when the multi-card 210 is issued, a credit applet corresponding to the credit card information may be issued, and one or more credit applets may be stored. For example, in the case of a VISA card, the multi-card 210 may contain only a VISA card applet, and when an AMEX card is issued in addition to the VISA card, VISA and AMEX card applets may be stored and allocated to the buttons of the input unit 290, respectively. The credit card information may be fixed or may be implemented to be changed by the user. As another embodiment, the multi-card 210 may receive one or more credit card information through the user terminal 110 and store the credit card information to be matched with the input unit 290.

As an embodiment, the multi-card 210 may be issued with and store membership card information through the user terminal 110. The membership card information may be stored to match the credit card information and the input unit, or may be stored to be individually matched with the input unit regardless of the credit card information.

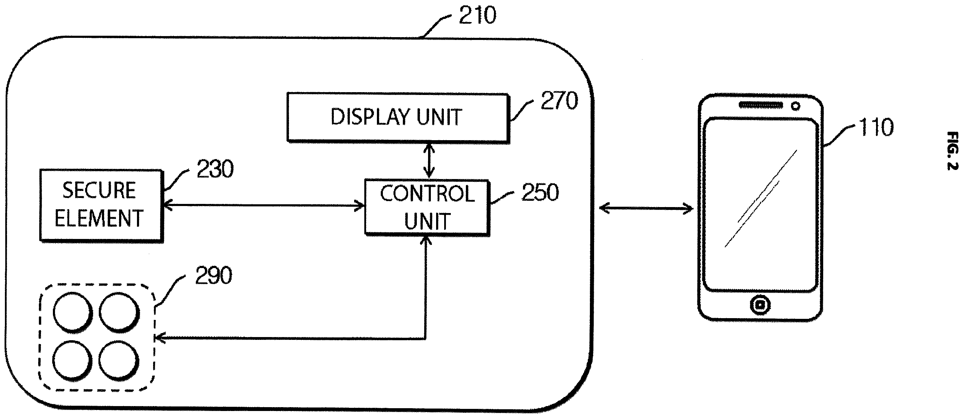

In addition, the multi-card 210 may communicate with an external terminal in a contact or contactless manner. Specifically, the IC chip may communicate with the card reader in a contact manner or give and receive power to and from the card reader in a contact manner, and may operate in a contactless manner based on the power generated by receiving a wireless signal through an antenna. The multi-card 210 according to an embodiment of the present invention may further include a display unit, input buttons, an MCU and the like, as well as the IC chip which is a secure element. The configuration and operation of the multi-card 210 will be described in more detail with reference to FIG. 2.

The payment terminal 310 is a payment terminal possessed by a franchise store owner and includes various types of payment terminals such as a point-of-sale (POS) system, a Credit Authorization Terminal (CAT), and Near Field Communication (NFC) and the like, including an IC terminal capable of reading the multi-card 210.

As an embodiment, the payment terminal 310 may be various forms of electronic devices implemented as a separate terminal (for example, an electronic device having an input device, such as a scanner or the like, and a display device) or implemented as software in a PC owned by a store or a mobile terminal of an employee. Like the user terminal, the payment terminal 310 may include a cellular phone, a smart phone, a smart pad, a notebook computer, a digital broadcasting terminal, a Personal Digital Assistant (PDA), a Portable Multimedia Player (PMP), a navigator, or a tablet PC of the owner or an employee of a franchise store, and various wearable devices such as a smart watch, a smart band and the like.

The payment terminal 310 according to an embodiment of the present invention is a payment terminal that can also accept a membership card in a credit card transaction, which can receive and process membership card information together with card information at the time of payment. As an embodiment, the membership card information may be included in the transaction response information of an existing credit card and the membership card information may be transferred, and as another embodiment, the membership card information may be transferred through additional transaction response information. The payment terminal 310 of the present invention may receive the transaction response information including the membership card information and transmit it to a processing server.

The service server 410 provides a service application for supporting the multi-card payment system of the present invention. A user may install the service application in the user terminal 110 and wirelessly connect the multi-card 210 and the user terminal 110 through wireless communication (e.g., NFC, BLE). The user terminal 110 may edit, store, and manage card information to be stored in the multi-card 210 through the service application. For example, the user may set to link a plurality of card information to a plurality of input unit buttons respectively for a user's card connected through the service application of the user terminal 110, and transmit the setting information to the multi-card 210 after the setting is completed. This multi-card setting method will be described in more detail with reference to FIGS. 2 to 4.

According to the multi-card payment system according to the present invention, there is an advantage of simultaneously processing payment and point accumulation using the multi-card of a user, without changing an existing payment system. In addition, the multi-card of the present invention may simultaneously perform payment and membership service by issuing membership card information through the user terminal in the multi-card in which at least one or more credit card information is stored.

FIG. 2 shows components of a multi-card according to an embodiment of the present invention. The multi-card 210 includes a secure element 230, a control unit 250, a display unit 270, and an input unit 290, and it is not limited thereto. Although it is not shown, the multi-card 210 may further include components needed for implementing the multi-card, such as an antenna, a battery and the like. As described above, the multi-card 210 may be connected to the user terminal 110 through wired or wireless communication, and may match, set and store card information and key buttons of the input unit through a service application running in the user terminal 110.

The secure element (SE) 230 according to the present invention may include a Universal Integrated Circuit Card (UICC), an embedded SE (eSE), and a micro SD. The secure element 230 may be implemented in the form of an IC chip described with reference to FIG. 1. The secure element 230 has its own encryption system and is also separated from the control unit 250 that manages operation of the multi-card 210 to be hacking resistant and highly secure. The secure element 230 may store card information about the payment means and a plurality of application programs linked to the card information. In an embodiment, the secure element 230 may store the card information in the form of an applet executed on a Java-based platform.

For example, the secure element 230 may issue card information (e.g., brand name and card number) of Visa card, Mastercard card or AMEX card to a Card Manage Applet, transfer the card information issued for the card manage applet to the control unit 250, and match the card information with a button of the input unit 290. The secure element 230 may also store information on membership cards (e.g., point cards, discount or accumulation cards, etc.), in addition to the card information.

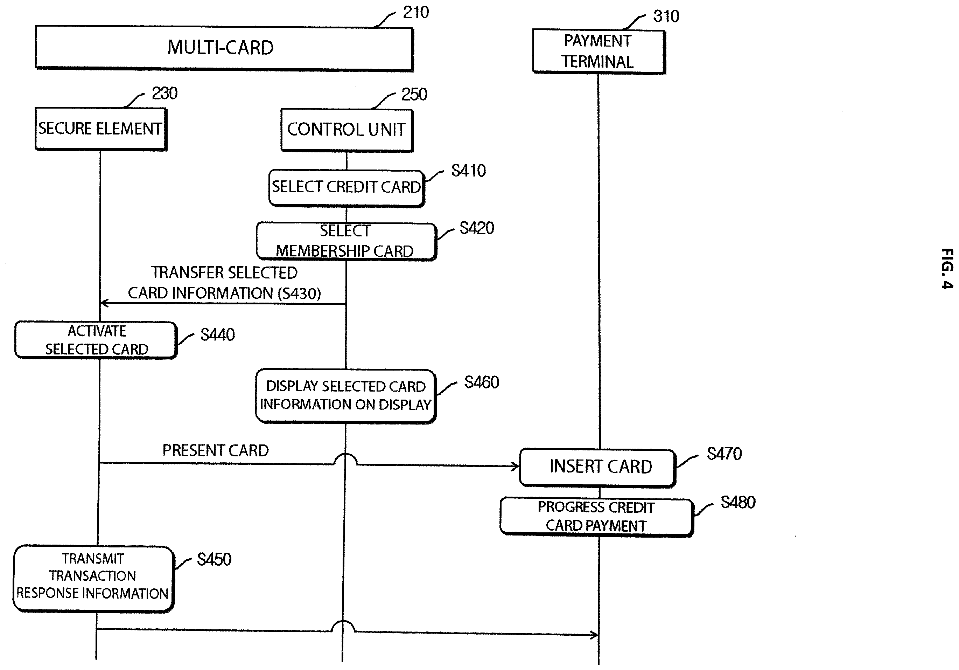

The secure element 230 may perform IC card transactions using one piece of card information activated by the input unit 290 among one or more card information stored in the multi-card 210. At this point, card information other than the activated card information may be in an inactive state. In addition, according to the present invention, the multi-card 210 may transmit payment card information (e.g., credit card information) and membership card information together to the payment terminal through the secure element 230 in an IC card transaction. The card transaction like this will be described in more detail with reference to FIG. 4.

The control unit 250 may include a Micro Controller Unit (MCU) in a form of a printed circuit or a chip interposed between an upper cover sheet and a lower cover sheet forming the multi-card 210. The control unit 250 is provided with a storage means and may manage a payment means mapped to the input unit 290. In an embodiment, a user may wirelessly connect the multi-card 210 and the user terminal 110 to match the membership card information with a button of the input unit 290 through the service application. The control unit 250 may receive and store matching information from the user terminal 110. The received membership information and matching information may be stored in the control unit 250 or the secure element 230.

The control unit 250 may wait for receipt of a selection signal from the input unit 290 for a preset time period and enter a sleep mode when there is no input of the input unit 290 for the preset time period. As the control unit 250 enters the sleep mode, consumption of power of the multi-card can be prevented.

The input unit 290 is an input device for receiving card or payment information from the user and includes various types of input devices such as buttons, a keypad, a numeric pad, a touch pad and the like. As an embodiment, the input unit 290 may be configured of buttons as many as a number corresponding to the card information that can be stored. For example, as shown in FIG. 2, the multi-card 210 may be implemented to include two buttons corresponding to two pieces of payment card information and two buttons corresponding to two pieces of membership card information. At this point, the user may select desired card information by pressing a button (keypad) matched in advance.

The display unit 270 is a display unit for displaying card information or status information and includes a component that can visually display information, including a black and white or color Liquid Crystal Display (LCD), a Light Emitting Display (LED), an Electronic Paper Display (EPD), and the like. As an embodiment, the display unit 270 may display information for identifying a payment means selected through the input unit 290. For example, when a payment means is selected through the input unit 290, the user may not know which payment means has been selected. Accordingly, the multi-card 210 includes the display unit 270 to feed back an operation including the selection to the user and displays information which identifies the payment means selected by the user so that a result of the user's selection may be confirmed.

For example, when the user selects a first payment card and a first membership card, the display unit 270 may output corresponding card names and card numbers on the display unit 270. However, since the multi-card payment system according to an embodiment of the present invention is implemented to transmit payment card information and membership card information together through a transaction command at the time of payment, it does not need to separately output the membership card information as a separate code image such as a barcode or QR code. That is, since the membership card information is transmitted together when an IC payment is made, it does not need to be outputted to the card for the sake of separate reading. For example, the display unit 270 may be implemented to output only the payment card name and the membership card name for the purpose of user identification. According to the present invention like this, payment and membership service (point accumulation or discount) can be simultaneously performed with only one payment action.

In addition, as an embodiment, the display unit 270 may further display various information, such as displaying an OTP number, card authentication information (expiry date, CVC number) and the like, as well as the status information (setting error, sleep mode, power ON/OFF, payment response) of the multi-card 210, while displaying which payment means is the set payment means.

As described above, the multi-card 210 of the present invention has an advantage of simultaneously processing payment and membership service with one card by storing one or more payment card information and membership card information, and storing each card information to be matched with the keypad of the input unit 290.

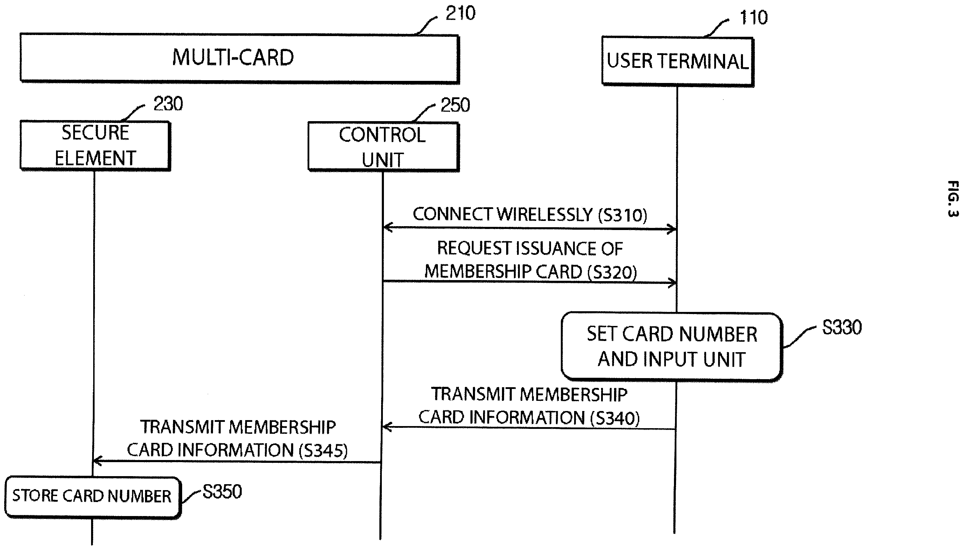

FIG. 3 is a sequence diagram illustrating a method of issuing membership card information of a multi-card according to an embodiment of the present invention. The multi-card 210 may receive card information to be stored in the multi-card 210 in association with a service application of the user terminal 110. In this embodiment, the credit card information is issued in advance to the multi-card 210 when the card is issued, and an embodiment of issuing the membership card information through the user terminal 110 will be described mainly. However, the present invention is not limited thereto, and it may be implemented to also issue the credit card information through the user terminal 110.

First, the multi-card 210 may wirelessly connect to the user terminal 110 through short range wireless communication (e.g., NFC, BLE, etc.) (S310). When devices are connected, the control unit 250 of the multi-card 210 may transmit a membership card issuance request signal to the user terminal 110 (S320). After receiving the card issuance request signal, the user terminal may begin a process of issuing membership card information stored in the user terminal 110. As an embodiment, the membership card information may be stored in advance in the user terminal 110 or may be inputted through an input device (camera, keypad, etc.) in real time. As another embodiment, the user terminal 110 may collect membership information that can be issued on the basis of user's account information through the service server 410 and then present the membership information to the user.

The user may set to match the membership card information stored in the user terminal 110 with a button of the input unit 290 of the multi card through a service application (S330). For example, it may be set to match membership card number 1 with button 1, and membership card number 2 to button 2. The user may change the matching information between the card and a button through the service application.

When the issuance setting of the user is completed, the user terminal 110 transmits the membership card information and matching information to the multi-card 210 (S340). At this point, the data transferred to the multi-card 210 includes the card number of the membership card, membership benefit information or matching information. The control unit 250 receives and stores the card information. As another embodiment, the card information may be stored in the secure element 230 of high security via the control unit 250 (S345 and S350).

FIG. 4 is a sequence diagram illustrating a payment method using a multi-card according to an embodiment of the present invention. A user may select a card to pay and a membership card using the buttons of the input unit 290 of the multi-card 210. Although a credit card is mainly described in this embodiment, it is not limited thereto, and various payment cards such as a check card, a gift card and the like may be used.

The user may select a credit card to be used by pressing a credit card selection button (S410). If there is no selection action, payment may be made on a credit card selected beforehand. As described above, the credit card information includes one or more card information issued to the multi-card 210 when the card is issued. The user may select membership card information to be used by pressing a membership card selection button (S420). The membership card information refers to one or more membership card information received through the user terminal 110 and may be stored in a form matched with a button of the input unit 290 through the user terminal 110. If there is no selection action like the credit card, payment can be made using membership information selected beforehand.

As an embodiment, a value previously stored in the secure element 230 may be retrieved as membership card information. As another example, it may be implemented to bring the card information set in the control unit as the membership card information in real time.

When the user selects a credit card to pay and a membership card through the input unit 290, the selected information is transferred to the secure element 230 (S430). As an embodiment, when there is one piece of credit card information, the control unit 250 transfers only the selected membership card information to the secure element 230. As another embodiment, when there is a plurality of credit card information, the control unit 250 may transfer selected credit card information and the membership card information to the secure element 230 together. The card information is transferred through mutual communication between the control unit 250 and the secure element 230, and various types of methods, such as I2C, SPI and the like, may be used.

The secure element 230 activates only the selected card information on the basis of the information received from the control unit 250 (S440). For example, when a VISA card is selected as the credit card and membership card number 1 is selected as the membership card, only the VISA card and the membership card number 1 are activated, and only information on the VISA card number and the membership card number 1 can be included when transaction response information is generated. At this point, information on the other cards maintains an inactive state.

Meanwhile, the control unit 250 of the multi-card 210 displays the selected card information on the display unit 270. This is to allow the user to confirm the card information that the user himself or herself has selected, and the card information may be outputted as a brand name, a logo or the like for identifying the card. Existing prior techniques have implemented the membership card information to be displayed as a card number, a barcode or a QR code and recognized through the reader of the payment terminal. However, since the payment system of the present invention only displays the membership card information for the purpose of confirmation, the membership card information may be outputted as a simple display such as a brand name, a logo, a nickname or the like for identification purpose, without the need of necessarily outputting a card number and a barcode.

After the user confirms the selected card information and presents it to the payer, the payer makes a payment using the payment terminal 310. The payment terminal 310 may insert the multi-card 210 into an IC terminal (slot) and make a credit card transaction (S470 and S480). According to the present invention, as the membership information is included in the transaction response information, payment and membership service can be processed together by inserting the multi-card 210 into IC terminal only once, without the need of inserting the card into the IC terminal or reading the magnetic stripe several times to make a payment.

As an embodiment, the secure element 230 may generate transaction response information using the selection card information (S450). For example, the transaction response information of the existing credit card may be generated to include the credit card information and the membership card information.

The multi-card 210 performs a card transaction by transmitting and receiving information with the payment terminal 310, and the multi-card 210 transmits transaction response information in response to a command transmitted from the payment terminal 310. All the information responded by the multi-card 210 are stored in the form of Tag Length Value (TLV). At this point, the membership card information may be added to the transaction response information in the form of TLV and transmitted to the payment terminal 310. For example, the transaction response information may include first transaction response information (e.g., an FCI response to a Select command) including a card type and transaction priority information, second transaction response information (e.g., an authentication information response to a GPO command) related to authentication, third transaction response information (e.g., a response to a Read Record command) including information such as a card number and an expiry date, and fourth transaction response information (e.g., a response to a Generate AC command (authorization request)) including a card verification result, and membership card information may be added to any one of the above response information. Since transmission of the transaction response information like this is a form that does not violate the transaction specification (e.g., EMV), it can be used without changing the existing system.

As an embodiment, the membership card information includes a membership type and a membership number. The membership card information data may be implemented as a TLV type data including a membership type (2 bytes), a length of membership number (1 byte), and the membership number.

The payment terminal 310 may receive transaction response information from the secure element 230 of the multi-card 210 and read credit card information and membership card information included in the transaction response information. As an embodiment, the payment terminal 310 may transmit a credit card transaction approval request to the server of the credit card issuer according to a result of the reading, and may transmit a membership benefit service approval request to the server of the membership issuer.

As described above, according to the payment method of the present invention, as the credit card information and the membership card information are included together in one transaction response information and transferred to the payment terminal, there is an effect of simultaneously performing payment and membership service by reading the IC card only once, without an additional action for processing the membership service.

Conventionally, there is a disadvantage of presenting a separate membership card or outputting and presenting a bar code, a QR code or the like in the case of an electronic card to receive membership service after making a payment. The present invention has an advantage of omitting the step of outputting and recognizing membership card information and maximizing convenience of a user by solving the problems.

Until now, the present invention has been described in detail focusing on the preferred embodiments shown in the drawings. These embodiments are not intended to limit the present invention, but only illustrative, and should be considered from the descriptive viewpoint, not the restrictive viewpoint. The true scope of the present invention should be defined by the spirit of the attached claims, not by the above descriptions. Although specific terms are used in this specification, they are used only to describe the concept of the present invention, not to limit the meaning or restrict the scope of the present invention disclosed in the claims. Each step of the present invention does not need to be necessarily performed in the disclosed order and may be performed in parallel, selectively or individually. Therefore, those skilled in the art may understand that various modified forms and equivalent other embodiments are possible without departing from the intrinsic spirit of the present invention claimed in the claims. It should be understood that the equivalents include all components invented to perform the same functions regardless of the equivalents, i.e., structures, to be developed in the future, as well as the currently disclosed equivalents.

## Claims

1. A multi-card comprising:
a secure element for storing at least one payment card information in an applet form;
an input unit including a plurality of buttons respectively matched with the card information; and
a control unit for receiving and storing matching information between at least one membership card information and the input unit from a user terminal,
wherein the secure element generates transaction response information including one membership card information and one payment card information activated according to selection of the input unit.

2. The multi-card according to claim 1, further comprising a display unit for outputting at least one information among the one membership card information and the one payment card information activated according to selection of the input unit.

3. The multi-card according to claim 1, wherein the matching information is information generated through a service application running in the user terminal and matching the at least one membership card information and the plurality of buttons respectively according to user's setting.

4. The multi-card according to claim 1, wherein the secure element transmits the activated one payment card information and the activated one membership card information to a payment terminal in one transaction response information.

5. The multi-card according to claim 1, wherein the membership card information includes at least one information among a membership type, a length of a membership number, and the membership number.

6. The multi-card according to claim 1, wherein the transaction response information is transmitted in response to a command of a payment terminal and generated in a form of tag length value (TLV).

7. The multi-card according to claim 1, wherein the matching information may be changed or set through a service application running in the user terminal.

8. A payment method using a multi-card, the method comprising the steps of:
storing at least one payment card information in a secure element of the multi-card;
receiving matching information between at least one membership card information and an input unit from a user terminal, and storing the matching information in a control unit;
activating, when a payment is made, one payment card information and one membership card information according to a selection signal generated by the input unit; and
generating transaction response information including the activated one payment card information and the activated one membership card information, and transmitting the transaction response information to the payment terminal, by the secure element.

9. The method according to claim 8, further comprising the step of displaying the activated one payment card information and one membership card information on a display unit.

10. The method according to claim 8, wherein the activating step includes the steps of:
activating one among the at least one payment card information stored in the secure element according to the selection signal generated by the input unit; and
selecting one among the at least one membership card information stored in the control unit, and transferring the selected information to the secure element.

11. The method according to claim 8, wherein the input unit includes a plurality of buttons respectively matched with card information, and the matching information is information generated through a service application running in the user terminal and matching the at least one membership card information with the plurality of buttons respectively according to user's setting.

12. The method according to claim 8, wherein the membership card information includes at least one information among a membership type, a length of a membership number, and the membership number.

13. The method according to claim 8, wherein the transaction response information is transmitted in response to a command of a payment terminal and generated in a form of tag length value (TLV).

14. The method according to claim 8, wherein the matching information may be changed or set through a service application running in the user terminal.
